# EUROPÄISCHE PATENTSCHRIFT

(11) **EP 1 331 237 B1**
(45) Veröffentlichungstag und Bekanntmachung des Hinweises auf die Patenterteilung: **13.09.2006**
(21) Anmeldenummer: 03000351.1
(22) Anmeldetag: 10.01.2003
(51) Int. Cl.: C08G 73/10

(54) **Verfahren zur Herstellung von Polyasparaginsäurederivaten**
Process for the preparation of polysuccinimid derivatives
Procédé de préparation de dérivés de polysuccinimides

(30) Priorität: 23.01.2002 DE 10202316
(43) Veröffentlichungstag der Anmeldung: 30.07.2003
(73) Patentinhaber: Goldschmidt GmbH, 45127 Essen (DE)
(72) Erfinder: Flintrop, Nicole, 47259 Duisburg (DE); Gay, Matthias, Dr., 45139 Essen (DE); Rau, Harald, 45138 Essen (DE); Schick, Ute, Dr., 50676 Köln (DE); Weitemeyer, Christian, Dr., 45134 Essen (DE)

(56) Entgegenhaltungen:
- EP-A- 0 832 851
- EP-A- 0 884 344

## Beschreibung

Die Erfindung betrifft ein Verfahren zur Herstellung von Polyasparaginsäurederivaten, insbesondere Polyasparaginsäurepolyetheramiden.

Polyaminosäurederivate, insbesondere Polyasparaginsäure, haben in jüngster Zeit aufgrund ihrer Eigenschaften, insbesondere ihrer biologischen Abbaubarkeit und Naturnähe, besondere Aufmerksamkeit gefunden. Es werden u.a. Anwendungen als biologisch abbaubare Komplexierungsmittel, Enthärter und Waschmittel-Builder vorgeschlagen.

Es gibt eine Vielzahl von Literaturvorschriften, in denen die Herstellung von Polyasparaginsäure (PAS) Polyasparaginsäureimid (PSI) beschrieben wird. Einen Überblick gibt M. Schwamborn in Nachr. Chem. Tech. Lab 44 (1996) Nr. 12. Hierin werden zwei Hauptherstellungswege unterschieden. Mit peptidchemischen Methoden lassen sich gezielt Poly-α- oder Poly-β-asparaginsäuren unterschiedlicher Molekulargewichte herstellen. Die Verfahren sind sehr aufwändig und werden nur zur Synthese geringer Mengen im Labormaßstab angewandt.

Für technische Anwendungen wird die thermische Polymerisation von Asparaginsäure mit Hilfe von Katalysatoren (Phosphorsäure) oder von Maleinsäureanhydrid mit Ammoniak bevorzugt. Hierbei erhält man immer im ersten Schritt Polysuccinimid als Reaktionsprodukt, das mit Laugen, bevorzugt Natriumhydroxid, zu Poylasparaginsäure-Natriumsalz geöffnet wird. Beispielsweise wird in DE-A-42 44 031 die Umsetzung von Maleinsäureanhydrid mit Ammoniak beschrieben. Man erhält zunächst Polysuccinimid, das zu Poylasparaginsäure-Natriumsalz in Lösung hydrolysiert wird. In einer anschließenden Sprühtrocknung kann festes Polyasparaginsäure-Natriumsalz erhalten werden.

Im Stand der Technik sind weitere Literaturstellen bekannt, welche die Herstellung von Polyasparaginsäure-Natriumsalz beschreiben: EP-A-0 578 449, WO-A-214753, EP-A-0 659 875, DE-A-44 20 642, DE-A-36 26 672, EP-A-0 612 784, DE-A-43 00 020, US-A-5 219 952.

Es ist kein technisches Verfahren bekannt, das direkt zur freien Poylasparaginsäure führt.

Im Labormaßstab sind verschiedene Ansätze möglich. So lässt sich Polyasparaginsäureperbenzylester in Lösung mit Wasserstoff unter heterogener Katalyse zur freien Polyasparaginsäure spalten. Ferner ist es möglich, mittels lonenaustauschchromatographie und anschließender Gefriertrocknung die freie Polyasparaginsäure aus deren Natriumsalz herzustellen. Beide Verfahren sind technisch sehr aufwändig und ökonomisch nicht sinnvoll.

Für die Herstellung von Polyasparaginsäurederivaten im technischen Maßstab stehen also nur Poylsuccinimid oder Polyasparaginsäure-Natriumsalz in Lösung zur Verfügung.

Die Darstellung von Polyasparaginsäurederivaten ist in der Literatur auf vielfältige Weise beschrieben.

Eine Standardmethode ist die Umsetzung von Polysuccinimid in organischen Lösungsmitteln mit Aminen zu Polyasparaginsäureamiden. Beispielsweise werden in US-A-5 929 198 und DE-A-198 43 455 Polysuccinimide aus verschiedenen Herstellungswegen in Dimethylformamid gelöst und mit unterschiedlichsten Verbindungen, die Aminfunktionen enthalten, zu Amiden umgesetzt.

Die Aufarbeitung ist ökonomisch aufwändig, da die Produkte in der Regel aus den Reaktionslösungen ausgefällt werden müssen und sich weitere Reinigungsschritte wie Dialyse und Gefriertrocknung anschließen. Ferner sind die verwandten Lösungsmittel für Anwendungen im Bereich der Pharmazie oder Kosmetik aus toxikologischer Sicht bedenklich, da sie sich nie vollständig abtrennen lassen.

Eine kleine Zahl von Veröffentlichungen beschäftigt sich mit der Umsetzung von Polysuccinimid in Abwesenheit organischer Lösungsmittel.

Die DE-A-43 07 114 beschreibt ein Verfahren, gemäß welchem in stark alkalischer Lösung (pH-Wert 10 bis 11) Aminosäuren vorgelegt und mit Polyasparaginsäureimid (= PSI) umgesetzt werden. In der DE-A-197 20 771 ist die Umsetzung von PSI in wässriger Lösung mit Aminen unter Zusatz von Tensiden und die Umsetzung von PSI mit Aminen in Substanz in einem Druckreaktor beschrieben.

Schließlich zeigt DE-A-196 31 380 ein Verfahren auf, in dem Polysuccinimid stufenweise mit verschiedenartigen Aminen, die sich insbesondere in der Länge der Kohlenwasserstoffreste unterscheiden, in Wasser umgesetzt wird.

Wie ersichtlich, wird bei der Herstellung von Polyasparaginsäurederivaten ausschließlich Polysuccinimid verwandt. In den oben genannten Veröffentlichungen finden sich zwar Hinweise darauf, dass auch freie Polyasparaginsäure für Synthesen eingesetzt werden könnte, jedoch keine konkreten Ausführungen. Dies ist vermutlich auf den oben beschriebenen verhältnismäßig hohen Aufwand zurückzuführen, der zur Herstellung von freier Polyasparaginsäure betrieben werden muß.

Es finden sich jedoch keine Hinweise im Stand der Technik, dass Polyasparaginsäure-Natriumsalz für Synthesen eingesetzt wird.

Eine Aufgabe der vorliegenden Erfindung war es daher, ein Verfahren zu finden, welches für die Herstellung von Polyasparaginsäurederivaten wie Polyasparaginsäureestern und insbesondere Polyasparaginsäureamiden und/oder Polyasparaginsäureesteramiden auch den Einsatz von Polyasparaginsäure-Natriumsalz als Ausgangsprodukt und die Durchführung des Verfahrens in wässriger Lösung, d.h. ohne Mitverwendung organischer Lösungsmittel, ermöglicht.

Gegenstand der Erfindung ist daher ein Verfahren zur Herstellung von Polyasparaginsäurederivaten der allgemeinen Formel (I) 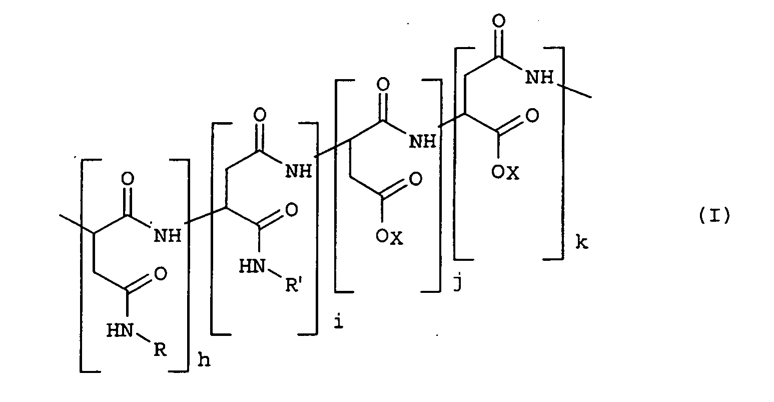 worin
- h, i, j, k: den molaren Anteil einer jeden Wiederholeinheit repräsentieren und Dezimalzahlen zwischen ≥ 0 und < 1 annehmen, wobei die Summe dieser Zahlen 1 ist und mindestens eine der Variablen h, i Zahlenwerte > 0 annimmt,
- X: unabhängig voneinander H, Alkali- oder Erdalkalimetallkationen oder andere Metallkationen, positiv geladene Derivate des Stickstoffs wie Ammoniumsalze, Salze der Amine, Hydroxyalkylamine oder Poyletheralkyl(en)amine und deren Salze bedeutet,
- R, R': unabhängig voneinander gegebenenfalls verzweigte, gegebenenfalls Doppelbindungen enthaltende, gegebenenfalls Heteroatome und/oder funktionelle Gruppen enthaltende aliphatische, cycloaliphatische und/oder aromatische Kohlenwasserstoffreste sein können,
welches dadurch gekennzeichnet ist, dass
in erster Stufe eine wässrige Mischung bestehend aus den basischen Hydrolyseprodukten des Polyasparaginsäureimids und Aminverbindungen auf pH-Werte von ≤ 3 eingestellt und
in zweiter Stufe die Aminolyse bei Temperaturen zwischen 140 und 200 °C, vorzugsweise bei 150 bis 180 °C durchgeführt wird.

Eine Besonderheit liegt in der chemischen Verbindung der Wiederholeinheiten. Die Parameter h und j bezeichnen eine α-Verknüpfung, die Parameter i und k eine β-Verknüpfung. Das Backbone kann eine 100 % α- oder β-Verknüpfung aufweisen, bevorzugt liegen beide Arten in einem beliebigen Verhältnis zueinander im Polymer vor, besonders bevorzugt liegt das Verhältnis α- zu β-Verknüpfung in einem Bereich von 1 zu 10 bis 10 zu 1.

R, R' können stehen für hydrophobe oder hydrophile monomere, oligomere oder polymere Seitenketten, insbesondere für lineare, verzweigte, gesättigte und/oder ungesättigte Kohlenwasserstoffe wie Alkyl-, Alkenyl-, Arylsubstituenten und Derivate hiervon, bevorzugt lineare Alkylgruppen, besonders bevorzugt im Bereich von eins bis zwanzig Kohlenstoffatomen und für funktionalisierte Alkylgruppen, wie Carboxyalkyl, Sulfoalkyl, Thioalkyl, Hydroxyalkyl oder Aminoalkyl, bevorzugt Hydroxyalkyl und Aminoalkyl. Typische Beispiele hierfür sind Methylamin, Dimethylamin, Ethylamin, Diethylamin, n-Propylamin, Di-n-Propylamin, i-Propylamin, Di-i-Propylamin, n-Butylamin, Di-n-Butylamin, tert.-Butylamin, Di-tert.-Butylamin, Hexylamin, Dihexylamin, sowie Octyl-, Decyl-, Dodecyl-, Tetradecyl-, Hexadecyl-, und Octadecylamin und die Dialkylamine hiervon, ferner Benzylamine, Phenylamine und Derivate hiervon, gesättigte cyclische Kohlenwasserstoffamine wie Cyclohexylamin und Derivate dieser Verbindungen, ferner Ethanolamin, Diethanolamin, Aminoethoxyethanol und weitere lineare, verzweigte, gesättigte und/oder ungesättigte Hydroxyalkylamine im Bereich von 2 bis 20 Kohlenstoffatomen, die auch mehrfach Hydroxylgruppen enthalten können, bevorzugt maximal sechs Hydroxylgruppen, sowie Diamine wie 1,3-Diaminopropan, 1,4-Diaminobutan, 1,6-Diaminohexan als auch substituierte Diamine wie N,N-Dimethylaminopropylamin.

Besonders bevorzugt stehen R, R' für Reste der folgenden allgemeinen Formel (II) 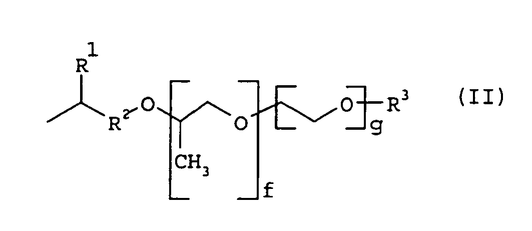 worin
- R¹: für Wasserstoff, einen Kohlenwasserstoffrest, vorzugsweise einen linearen oder verzweigten Alkylrest mit 1 bis 20, bevorzugt 1 bis 4 C-Atomen wie Methyl-, Ethyl-, Propyl-, Butyl- oder Arylrest und dessen substituierte Derivate steht,
- R²: für einen Kohlenwasserstoffrest, vorzugsweise einen linearen oder verzweigten Alkylrest mit 1 bis 10, bevorzugt 1 bis 4 C-Atomen oder für Phenylengruppen und deren substituierte Derivate steht,
- R³: für Wasserstoff, einen linearen oder verzweigten Kohlenwasserstoffrest wie Alkyl oder Aryl, bevorzugt Alkyl im Bereich C₁ bis C₂₀, besonders bevorzugt im Bereich C₁ bis C₄ steht,
- f: 0 bis 300, bevorzugt 1 bis 100, besonders bevorzugt im Bereich 2 bis 10 und
- g: 0 bis 300, bevorzugt 0 bis 100, besonders bevorzugt 10 bis 20, ist
wobei
das Verhältnis von f zu g = 0 zu 100 bis etwa 60 zu 40 beträgt und worin die Propylenoxideinheiten und Ethylenoxydeinheiten statistisch oder blockweise verteilt sein können.

Die Einstellung des pH-Wertes der Reaktionsmischung der ersten Stufe wird beispielsweise durch Zugabe konzentrierter organischer oder anorganischer Säuren erreicht. Der Zeitpunkt der Säurezugabe ist unkritisch und frei variierbar. Vorzugsweise wird sie direkt zu der wässrigen PSI/Aminmischung gegeben. Es ist auch möglich, aus der basischen Lösung des Polyasparaginsäureimids Wasser soweit zu entfernen, so dass eine rührfähige Mischung zurückbleibt, die mit den weiteren Reaktionspartnern versetzt werden kann.

In einer weiteren Abwandlung des Verfahrens können bei voluminösen Aminen, wie den polyethermodifizierten Aminen, diese im Reaktionsgefäß vorgelegt und erst dann mit den übrigen Edukten zur Reaktion gebracht werden. Hierbei ist es auch möglich, Polyasparaginsäureimid in Substanz mit polyethermodifizierten Aminen zur Reaktion zu bringen bzw. nur soviel Wasser zuzusetzen, dass eine rührfähige Reaktionsmischung entsteht.

Bevorzugt wird Polyetheramin bei 100 bis 120 °C in einem Reaktionskolben unter Rühren vorgelegt und mit Polysuccinimid versetzt und bei Temperaturen zwischen 140 und 170 °C zur Reaktion gebracht. Es wird kein Lösungs- oder Fließmittel zugesetzt. Im Rahmen dieser Herstellungsvarianten kann die Reaktion in üblichen Reaktoren durchgeführt werden. Im Sinne dieser Erfindung sind übliche Reaktoren Reaktionsgefäße mit bekannten Rührwerkzeugen wie Ankerrührer, Dissovlerscheibe, Mig-/Intermig und den entsprechenden Rührmotoren.

In einer weiteren Abwandlung des Herstellungsverfahrens wird in einem Hochviskosreaktor, bevorzugt der Firma List, festes Polyasparaginsäureimid (Polysuccinimid, PSI) vorgelegt und mit Aminen zur Reaktion gebracht. Üblicherweise wird PSI bei Temperaturen zwischen 80 und 100 °C in den Reaktor eingetragen und dann schrittweise mit der Aminkomponente so versetzt, dass die Viskosität der entstehenden Paste nicht die Belastungsgrenze des Hochviskosreaktors überschreitet. Die eigentliche Reaktion wird bei 120 bis 180 °C durchgeführt.

### Durchführungsbeispiele:

### Beispiel 1:

Die ca. 40 %ige wässrige Lösung eines Polyasparaginsäure-Natriumsalzes (520 g, 1,5 mol) wird in einem Dreihalsrundkolben unter Rühren mit konzentrierter Schwefelsäure auf einen pH-Wert von ca. 2 eingestellt. Man versetzt die Lösung mit dem Methoxypolyoxyalkylenamin Jeffamine M-1000® der Firma Huntsman (470 g, 0,5 mol), überprüft und stellt den pH-Wert (Gesamtverbrauch Schwefelsäure: ca. 110 g) auf 2 ein. Es wird unter Rühren auf 140 °C erhitzt und dabei bereits Wasser abdestilliert. Man steigert die Reaktionstemperatur auf 170 °C und setzt die Destillation im Vakuum fort. Insgesamt wird über einen Zeitraum von fünf Stunden destilliert. Man erhält eine dunkelbraune Paste.

### Beispiel 2:

Eine ca. 40 %ige Lösung von Polyasparaginsäure-Natriumsalz (300 g) in Wasser wird in einem Planschliffkolben unter Rühren mit konzentrierter Salzsäure auf einen pH-Wert von ca. 2 eingestellt. Man versetzt die Lösung mit dem Methoxypolyoxyalkylenamin Jeffamine M-1000® der Firma Huntsman (ca. 640 g), überprüft und stellt erneut den pH-Wert auf 2 ein (Gesamtverbrauch Salzsäure: ca. 126 g). Es entsteht eine viskose Lösung, die unter Rühren auf 140 °C erhitzt wird, wobei bereits Wasser überdestilliert. Man steigert die Reaktionstemperatur auf 170 °C und setzt die Destillation im Vakuum fort. Insgesamt wird fünf Stunden destilliert. Man erhält eine dunkelbraune Paste.

### Beispiel 3:

In einem Planschliffkolben mit Rührer werden ca. 300 g (ca. 1,5 mol) Jeffamine M-1000® aufgeschmolzen und auf ca. 100 °C erhitzt und mit 150 g (1,5 mol) Polysuccinimid (mittlere Molmasse ca. 1500 g/mol) unter Rühren versetzt. Man erhitzt ca. fünf Stunden auf 130 °C und legt dabei Vakuum an, wobei kein Destillat übergeht. Man erhält eine hochviskose braune Paste, die bei Raumtemperatur erstarrt.

### Beispiel 4:

1.600 g Polysuccinimid werden in einem Hochviskosreaktor der Firma List vorgelegt und unter Mahlen und Erhitzen auf 130 °C innerhalb von 60 Min. mit 400 g Ethanolamin versetzt. Dabei werden ca. 75 ml Cyclohexanon zur Senkung der Viskosität zudosiert. Für weitere 4 Stunden wird die Reaktionstemperatur auf 150 °C gesteigert und dabei destilliert die letzten 60 Min. unter Vakuum. Es wird eine hochviskose braune Paste ausgetragen, die bei Raumtemperatur erstarrt.

### Beispiel 5:

1.200 g Polysuccinimid (12,37 mol Imideinheiten; Mn = 1.500 g/mol) werden in einem Hochviskosreaktor der Firma List vorgelegt, ca. 20 Min. gemahlen und 500 ml Xylol als Wasserschlepper zugetropft. Bei ca. 100 bis 120 °C werden innerhalb von 1,5 Stunden 530 g (8,7 mol) Ethanolamin und 100 ml Cyclohexanon zugetropft. Innerhalb von vier Stunden wird die Temperatur auf 140 °C gesteigert und dabei unter Normaldruck und im Vakuum destilliert. Die Gesamtdauer der Reaktion beträgt acht Stunden. Aus dem List-Reaktor wird bei 100 bis 120 °C eine hochviskose hellbraune Paste abgelassen, die bei Raumtemperatur sofort erstarrt.

### Beispiel 6:

Die ca. 40 %ige wässrige Lösung eines Polyasparaginsäure-Natriumsalzes (422 g, 1,28 mol) wird in einem Dreihalsrundkolben unter Rühren mit konzentrierter Schwefelsäure auf einen pH-Wert von ca. 2 eingestellt. Man versetzt die Lösung mit dem Methoxypolyoxyalkylenamin Jeffamine M-1000® der Firma Huntsman (257 g, 0,26 mol) und anschließend mit Ethanolamin (47 g; 0,77 mol) und stellt den pH-Wert (Gesamtverbrauch Schwefelsäure: ca. 98 g) auf 2. Es wird unter Rühren auf 140 °C erhitzt wobei bereits Wasser abdestilliert. Man steigert die Reaktionstemperatur auf 170 °C und setzt die Destillation im Vakuum fort. Insgesamt wird über einen Zeitraum von 14 Stunden destilliert. Man erhält eine dunkelbraune Paste.

## Patentansprüche

1. Verfahren zur Herstellung von Polyasparaginsäurederivaten der allgemeinen Formel (I) 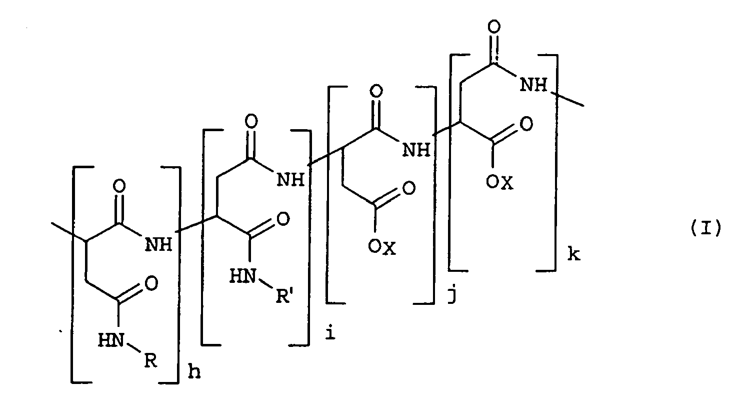 worin
h, i, j, k den molaren Anteil einer jeden Wiederholeinheit repräsentieren und Dezimalzahlen zwischen ≥ 0 und < 1 annehmen, wobei die Summe dieser Zahlen 1 ist und mindestens eine der Variablen h, i Zahlenwerte > 0 annimmt,
X unabhängig voneinander H, Alkali- oder Erdalkalimetallkationen oder andere Metallkationen, positiv geladene Derivate des Stickstoffs wie Ammoniumsalze, Salze der Amine, Hydroxyalkylamine oder Polyetheralkyl(en)amine und deren Salze bedeutet,
R, R' unabhängig voneinander gegebenenfalls verzweigte, gegebenenfalls Doppelbindungen enthaltende, gegebenenfalls Heteroatome und/oder funktionelle Gruppen enthaltende aliphatische, cycloaliphatische und/oder aromatische Kohlenwasserstoffreste sein können,
welches **dadurch gekennzeichnet ist, dass**
in erster Stufe eine wässrige Mischung bestehend aus den basischen Hydrolyseprodukten des Polyasparaginsäureimids und Aminverbindungen auf pH-Werte von ≤ 3 eingestellt und
in zweiter Stufe die Aminolyse bei Temperaturen zwischen 140 und 200°C, vorzugsweise bei 150 bis 180 °C durchgeführt wird.

2. Verfahren zur Herstellung von Polyasparaginsäurederivaten gemäß Anspruch 1, worin R, R' unabhängig voneinander für lineare Alkylgruppen im Bereich von 1 bis 20 Kohlenstoffatomen steht.

3. Verfahren zur Herstellung von Polyasparaginsäurederivaten gemäß Anspruch 1, worin R, R' unabhängig voneinander für Reste der allgemeinen Formel (II) 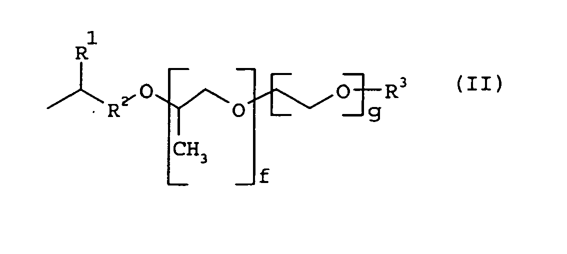 stehen, worin
R¹ für Wasserstoff, einen Kohlenwasserstoffrest, vorzugsweise einen linearen oder verzweigten Alkylrest mit 1 bis 20, bevorzugt 1 bis 4 C-Atomen wie Methyl-, Ethyl-, Propyl-, Butyl- oder Arylrest und dessen substituierte Derivate steht,
R² für einen Kohlenwasserstoffrest, vorzugsweise einen linearen oder verzweigten Alkylrest mit 1 bis 10, bevorzugt 1 bis 4 C-Atomen oder für Phenylengruppen und deren substituierte Derivate steht,
R³ für Wasserstoff, einen linearen oder verzweigten Kohlenwasserstoffrest wie Alkyl oder Aryl, bevorzugt Alkyl im Bereich C₁ bis C₂₀, besonders bevorzugt im Bereich C₁ bis C₄ steht,
f 0 bis 300, bevorzugt 1 bis 100, besonders bevorzugt im Bereich 2 bis 10,
g 0 bis 300, bevorzugt 0 bis 100, besonders bevorzugt 10 bis 20 beträgt und
wobei
das Verhältnis von f zu g = 0 zu 100 bis etwa 60 zu 40 beträgt und worin die Propylenoxideinheiten und Ethylenoxydeinheiten statistisch oder blockweise verteilt sein können.

4. Verfahren zur Herstellung von Polyasparaginsäurederivaten gemäß Anspruch 1, in dem alkalisch wässrige Lösungen von Asparaginsäure, die ein Verhältnis von α- zu β-Verknüpfung in einem Bereich von 1 zu 10 bis 10 zu 1 aufweisen, verwendet werden.

5. Verfahren zur Herstellung von Polyasparaginsäurederivaten gemäß Anspruch 3, worin R¹ für einen linearen oder verzweigten Alkylrest im Bereich C₁ bis C₄ steht.

6. Verfahren zur Herstellung von Polyasparaginsäurederivaten gemäß Anspruch 3, worin R² für einen linearen oder verzweigten Alkylrest im Bereich C₁ bis C₄ oder Phenylengruppen und R³ für einen linearen oder verzweigten Kohlenwasserstoffrest im Bereich C₁ bis C₄ steht.

## Claims

1. Process for the preparation of polyaspartic acid derivatives of the general formula (I) 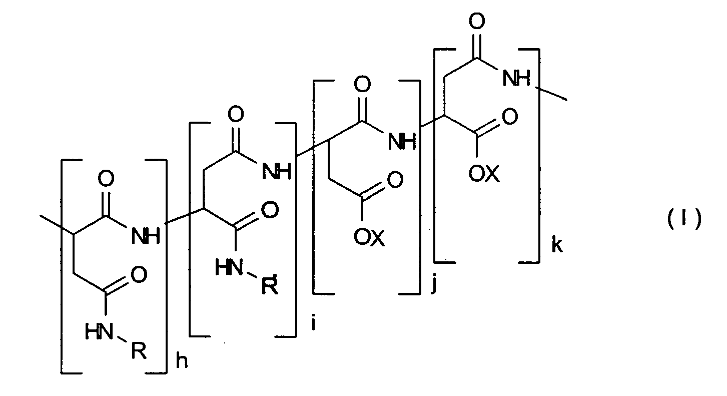 in which
h, i, j, k represent the molar fraction of each repeat unit and assume decimal numbers between ≥ 0 and < 1 where the sum of these numbers is 1 and at least one of the variables h, i assumes numerical values > 0,
X independently of the others, is H, alkali metal ions or alkaline earth metal ions or other metal cations, positively charged derivatives of nitrogen, such as ammonium salts, salts of amines, hydroxyalkylamines or polyether alkyl(en)amines and salts thereof,
R, R', independently of one another, may be aliphatic, cycloaliphatic and/or aromatic hydrocarbon radicals which are optionally branched, optionally contain double bonds and optionally contain heteroatoms and/or functional groups,
which is **characterized in that**,
in the first stage, an aqueous mixture consisting of the basic hydrolysis products of polysuccinimide and amine compounds is adjusted to pH values of ≤ 3 and
in the second stage, the aminolysis is carried out at temperatures between 140 and 200°C, preferably at 150 to 180°C.

2. Process for the preparation of polyaspartic acid derivatives according to Claim 1, in which R, R', independently of one another, are linear alkyl groups in the range from 1 to 20 carbon atoms.

3. Process for the preparation of polyaspartic acid derivatives according to Claim 1, in which R, R', independently of one another, are radicals of the general formula (II) 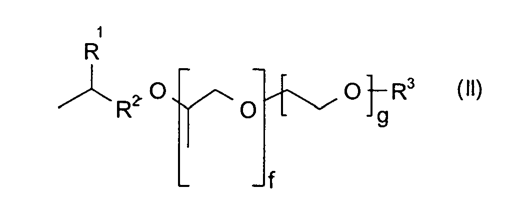 in which
R¹ is hydrogen, a hydrocarbon radical, preferably a linear or branched alkyl radical having 1 to 20, preferably 1 to 4, carbon atoms, such as a methyl, ethyl, propyl, butyl or aryl radical and substituted derivatives thereof,
R² is a hydrocarbon radical, preferably a linear or branched alkyl radical having 1 to 10, preferably 1 to 4, carbon atoms, or is phenylene groups and substituted derivatives thereof,
R³ is hydrogen, a linear or branched hydrocarbon radical, such as alkyl or aryl, preferably alkyl in the range C₁ to C₂₀, particularly preferably in the range C₁ to C₄,
f is 0 to 300, preferably 1 to 100, particularly preferably in the range 2 to 10,
g is 0 to 300, preferably 0 to 100, particularly preferably 10 to 20 and
where
the ratio of f to g = 0 to 100 to about 60 to 40, and in which the propylene oxide units and ethylene oxide units may be distributed randomly or in blocks.

4. Process for the preparation of polyaspartic acid derivatives according to Claim 1, in which aqueous alkaline solutions of aspartic acid which have a ratio of α-linkage to β-linkage in the range from 1:10 to 10:1 are used.

5. Process for the preparation of polyaspartic acid derivatives according to Claim 3, in which R¹ is a linear or branched alkyl radical in the range C₁ to C₄.

6. Process for the preparation of polyaspartic acid derivatives according to Claim 3, in which R² is a linear or branched alkyl radical in the range C₁ to C₄ or phenylene group, and R³ is a linear or branched hydrocarbon radical in the range C₁ to C₄.

## Revendications

1. Procédé de préparation de dérivés de poly(acide asparagique) de la formule générale (I) 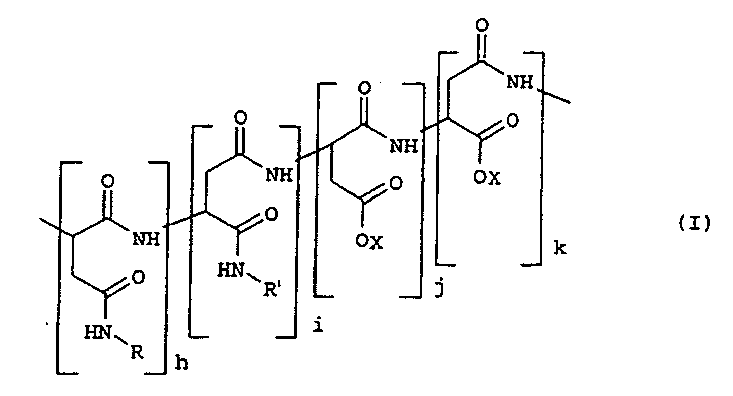 dans laquelle
h, i, j, k représentent la fraction molaire de chaque unité répétitive et prennent des valeurs décimales entre ≥ 0 et < 1, la somme de ces nombres valant 1, et au moins l'une des variables h, i prend des valeurs numériques > 0,
X représentent indépendamment l'un de l'autre H, des cations de métal alcalin ou alcalino-terreux ou d'autres cations métalliques, des dérivés d'azote à charge positive comme des sels d'ammonium, des sels d'amines, des hydroxyalkylamines ou des polyétheralkyl(ène)amines et leurs sels,
R, R' peuvent représenter indépendamment l'un de l'autre des radicaux hydrocarbonés aliphatiques, cycloaliphatiques et/ou aromatiques éventuellement ramifiés, contenant éventuellement des doubles liaisons, contenant éventuellement des hétéroatomes et/ou des groupes fonctionnels,
**caractérisé en ce que**
dans la première étape, on ajuste un mélange aqueux composé des produits d'hydrolyse basique de l'imide de poly(acide asparagique) et de composés aminés à un pH ≤ 3 et,
dans la deuxième étape, on opère l'aminolyse à des températures de 140 à 200°C, de préférence de 150 à 180°C.

2. Procédé de préparation de dérivés de poly(acide asparagique) suivant la revendication 1, dans lequel R, R' représentent indépendamment l'un de l'autre des radicaux alkyle linéaires de l'ordre de 1 à 20 atomes de carbone.

3. Procédé de préparation de dérivés de poly(acide asparagique) suivant la revendication 1, dans lequel R, R' représentent indépendamment l'un de l'autre des radicaux de la formule générale (II), 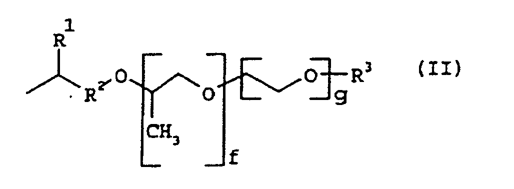 dans laquelle
R¹ représente de l'hydrogène, un radical hydrocarboné, de préférence un radical alkyle linéaire ou ramifié comportant de 1 à 20, de préférence de 1 à 4 atomes de C, comme le méthyle, l'éthyle, le propyle, le butyle, ou un radical aryle et ses dérivés substitués,
R² représente un radical hydrocarboné, de préférence un radical alkyle linéaire ou ramifié comportant de 1 à 10, de préférence de 1 à 4 atomes de C, ou des groupes phénylène et leurs dérivés substitués,
R³ représente de l'hydrogène ou un radical hydrocarboné linéaire ou ramifié comme un alkyle ou un aryle, de préférence un alkyle de l'ordre de C₁ à C₂₀, plus préférentiellement de l'ordre de C₁ à C₄,
f vaut de 0 à 300, de préférence de 1 à 100, plus préférentiellement de l'ordre de 2 à 10 et
g vaut de 0 à 300, de préférence de 0 à 100, plus préférentiellement de 10 à 20, et
le rapport de f à g valant de 0 : 100 à environ 60 : 40 et les unités d'oxyde de propylène et les unités d'oxyde d'éthylène pouvant être distribuées de manière statistique ou en blocs.

4. Procédé de préparation de dérivés de poly(acide asparagique) suivant la revendication 1, dans lequel on utilise des solutions aqueuses alcalines d'acide asparagique, qui présentent une proportion de liaisons α, β de l'ordre de 1 : 10 à 10 : 1.

5. Procédé de préparation de dérivés de poly(acide asparagique) suivant la revendication 3, où R¹ représente un radical alkyle linéaire ou ramifié de l'ordre de C₁ à C₄ .

6. Procédé de préparation de dérivés de poly(acide asparagique) suivant la revendication 3, où R² représente un radical alkyle linéaire ou ramifié de l'ordre de C₁ à C₄ ou un groupe phénylène et R³ un radical hydrocarboné linéaire ou ramifié de l'ordre de C₁ à C₄.
